# EUROPÄISCHE PATENTSCHRIFT

(11) **EP 3 212 453 B1**
(45) Veröffentlichungstag und Bekanntmachung des Hinweises auf die Patenterteilung: **25.12.2019**
(21) Anmeldenummer: 15793702.0
(22) Anmeldetag: 27.10.2015
(51) Int. Cl.: B60K 35/00, B60K 37/06, G06F 3/0488, B60W 50/10, G06F 3/01

(54) **VERFAHREN UND SYSTEM ZUM BETREIBEN EINER BERÜHRUNGSSENSITIVEN ANZEIGEEINRICHTUNG EINES KRAFTWAGENS**
METHOD AND SYSTEM FOR OPERATING A TOUCH-SENSITIVE DISPLAY DEVICE OF A MOTOR VEHICLE
PROCÉDÉ ET SYSTÈME POUR FAIRE FONCTIONNER UN SYSTÈME D'AFFICHAGE TACTILE D'UN VÉHICULE À MOTEUR

(30) Priorität: 31.10.2014 DE 102014016222
(43) Veröffentlichungstag der Anmeldung: 06.09.2017
(73) Patentinhaber: AUDI AG, 85045 Ingolstadt (DE)
(72) Erfinder: WUNDERLICH, Matthias, 85053 Ingolstadt (DE); WALL, Christian, 85122 Hitzhofen (DE)
(86) Internationale Anmeldenummer: PCT/EP2015/002123
(87) Internationale Veröffentlichungsnummer: WO 2016/066258

(56) Entgegenhaltungen:
- EP-A1- 1 854 678
- DE-A1-102007 029 618
- DE-A1-102013 007 256
- US-A1- 2003 023 352
- US-A1- 2011 164 063
- US-A1- 2014 152 600

## Beschreibung

Die Erfindung betrifft ein Verfahren sowie ein System zum Betreiben einer berührungssensitiven Anzeigeeinrichtung eines Kraftwagens der in den unabhängigen Patentansprüchen angegebenen Art. Des Weiteren betrifft die Erfindung einen Kraftwagen mit einem derartigen System zum Betreiben einer berührungssensitiven Anzeigeeinrichtung eines Kraftwagens.

In Kraftwagen werden vermehrt berührungssensitive Anzeigeeinrichtungen, beispielsweise in Form von Touchscreens, eingesetzt. Gängig ist hierbei, dass eine derartige berührungssensitive Anzeigeeinrichtung im Bereich einer Mittelkonsole oder oberhalb von einer Mittelkonsole angeordnet ist, wobei über die berührungssensitive Anzeigeeinrichtung unterschiedlichste Funktionen des Kraftwagens, wie beispielsweise Einstellungen an einem Infotainmentsystem, an einem Navigationssystem oder dergleichen, berührungsgesteuert verändert werden. Derartige Anzeigeeinrichtungen werden von ihren Abmaßen her immer größer, sodass infolgedessen eine ergonomische Erreichbarkeit der gesamten Anzeigeeinrichtung durch einen Fahrer und einen Beifahrer immer stärker erschwert wird.

Die DE 10 2009 059 867 A1 zeigt ein Verfahren zum Betreiben einer berührungssensitiven Anzeigeeinrichtung eines Kraftwagens, wobei mittels einer Annäherungserfassungseinrichtung ermittelt wird, ob ein Fahrzeuginsasse die Anzeigeeinrichtung durch eine Berührung betätigen möchte. In diesem Fall werden mittels der Anzeigeeinrichtung angezeigte virtuelle Schaltflächen auf der Anzeigeeinrichtung in Richtung des Benutzers verschoben.

Die US 2009 03 27 977 A1 zeigt ebenfalls ein Verfahren zum Betreiben einer berührungssensitiven Anzeigeeinrichtung, wobei ermittelt wird, in welchem Bereich der Anzeigeeinrichtung mit einer berührungsgesteuerten Benutzereingabe zu rechnen ist. Sobald diese Ermittlung erfolgt ist, werden entsprechende virtuelle, mittels der Anzeigeeinrichtung angezeigte Tasten in diesen Bereich verschoben.

Die DE 10 2008 048 825 A9 zeigt ein Anzeige- und Bediensystem in einem Kraftfahrzeug mit einer benutzerbeeinflussbaren Darstellung von Anzeigeobjekten. Es erfolgt eine Verschiebung der Anzeigeobjekte in Abhängigkeit einer erfassten Annäherung einer Hand eines Benutzers.

Die US 2014/152600 A1 zeigt ein Verfahren zum Betreiben einer berührungssensitiven Anzeigeeinrichtung eines Kraftwagens. Mittels der berührungssensitiven Anzeigeeinrichtung werden am linken und am rechten Rand jeweils Pfeilsymbole angezeigt. Wenn ein Fahrzeuginsasse das im linken Randbereich angezeigte Pfeilsymbol berührt, wird eine erste graphische Benutzeroberfläche in einem linken Bereich der Anzeigeeinrichtung angezeigt. Wenn ein Benutzer das im rechten Randbereich der Anzeigeeinrichtung dargestellte Pfeilsymbol hingegen anklickt, wird eine zweite graphische Benutzeroberfläche in einem rechten Bereich der Anzeigeeinrichtung angezeigt, sodass nun die beiden graphischen Benutzeroberflächen gleichzeitig mittels der Anzeigeeinrichtung angezeigt werden. Durch erneute Betätigung von einem der Pfeilsymbole kann der Fahrzeuginsasse bewirken, dass entweder die im rechten oder linken Bereich der Anzeigeeinrichtung angezeigte graphische Benutzeroberfläche wieder ausgeblendet wird.

Die US 2011/164063 A1 zeigt ein Verfahren zum Betreiben einer berührungssensitiven Anzeigeeinrichtung eines Kraftwagens. Dabei wird unterschieden, ob ein auf dem Fahrersitz oder ein auf dem Beifahrersitz sitzender Fahrzeuginsasse seinen Finger gerade an die Anzeigeeinrichtung annähert. In Abhängigkeit davon werden mittels der Anzeigeeinrichtung angezeigte Icons so positioniert, dass entweder der Beifahrer oder der Fahrer die Icons besonders bequem erreichen kann.

Es ist die Aufgabe der vorliegenden Erfindung, eine bedarfsgerechte und insassenorientierte Bedienung einer berührungssensitiven Anzeigeeinrichtung eines Kraftwagens zu ermöglichen.

Diese Aufgabe wird durch ein Verfahren sowie durch ein System zum Betreiben einer berührungssensitiven Anzeigeeinrichtung mit den Merkmalen der unabhängigen Patentansprüche sowie durch einen Kraftwagen mit einem derartigen System gelöst. Vorteilhafte Ausgestaltungen mit zweckmäßigen und nicht-trivialen Weiterbildungen der Erfindung sind in den abhängigen Ansprüchen angegeben.

Das erfindungsgemäße Verfahren zum Betreiben einer berührungssensitiven Anzeigeeinrichtung eines Kraftwagens umfasst die folgenden Schritte:
- Erfassen, ob ein Fahrer oder ein Beifahrer des Kraftwagens die Anzeigeeinrichtung bedienen möchte;
- falls erfasst wird, dass ausschließlich der Fahrer die Anzeigeeinrichtung bedienen möchte: Betreiben der Anzeigeeinrichtung in einem ersten Betriebsmodus, in welchem eine graphische Benutzeroberfläche ausschließlich in einem fahrerseitigen Anzeigebereich der Anzeigeeinrichtung angezeigt wird;
- falls erfasst wird, dass ausschließlich der Beifahrer des Kraftwagens die Anzeigeeinrichtung bedienen möchte: Betreiben der Anzeigeeinrichtung in einem zweiten Betriebsmodus, in welchem die graphische Benutzeroberfläche ausschließlich in einem beifahrerseitigen Anzeigebereich der Anzeigeeinrichtung angezeigt wird;
- falls erfasst wird, dass der Fahrer und der Beifahrer des Kraftwagens die Anzeigeeinrichtung bedienen möchten: Betreiben der Anzeigeeinrichtung in einem dritten Betriebsmodus, in welchem die graphische Benutzeroberfläche in dem fahrerseitigen Anzeigebereich und zumindest ein Teil der graphischen Benutzeroberfläche zusätzlich noch in dem beifahrerseitigen Anzeigebereich angezeigt wird.

Es ist also erfindungsgemäß vorgesehen, zu ermitteln, ob ein Fahrer oder ein Beifahrer des Kraftwagens gerade die Anzeigeeinrichtung bedienen möchte. In Abhängigkeit von dieser Information erfolgt eine fahrerseitige oder beifahrerseitige Ausrichtung der angezeigten graphischen Benutzeroberfläche, sodass ein Fahrer und auch ein Beifahrer die berührungssensitive Anzeigeeinrichtung besonders einfach und ergonomisch bedienen können. Ein wesentlicher Aspekt der Erfindung liegt dabei darin, dass für den Fall, dass sowohl der Fahrer als auch der Beifahrer des Kraftwagens die Anzeigeeinrichtung bedienen möchten, eine Aufteilung der Anzeigefläche der Anzeigeeinrichtung derart erfolgt, dass die graphische Benutzeroberfläche in dem fahrerseitigen Anzeigebereich und zumindest ein Teil der graphischen Benutzeroberfläche zusätzlich noch in dem beifahrerseitigen Anzeigebereich angezeigt wird.

Mit anderen Worten ist es erfindungsgemäß vorgesehen, dass die berührungssensitive Anzeigeeinrichtung in diesem besagten Fall in einem Splitscreen-Modus, welcher dem dritten Betriebsmodus entspricht, betrieben wird. Vorzugsweise wird in dem beifahrerseitigen Anzeigebereich nur eine reduzierte Menüauswahl beziehungsweise Bedienoberfläche bereitgestellt, indem nur ein Teil der graphischen Benutzeroberfläche zusätzlich noch in dem beifahrerseitigen Anzeigebereich angezeigt wird. Insbesondere in dem Fall, dass sowohl der Fahrer als auch der Beifahrer des Kraftwagens die berührungssensitive Anzeigeeinrichtung bedienen möchten, wird durch den besagten Splitscreen-Modus ermöglicht, dass sowohl der Fahrer als auch der Beifahrer die berührungssensitive Anzeigeeinrichtung besonders einfach und ergonomisch erreichen und somit diese bedienen können.

In vorteilhafter Ausgestaltung der Erfindung ist es vorgesehen, dass die Anzeigeeinrichtung in einem vierten Betriebsmodus betrieben wird, in welchem die graphische Benutzeroberfläche ausschließlich in einem mittigen Anzeigebereich der Anzeigeeinrichtung angezeigt wird, falls erfasst wird, dass weder der Fahrer noch der Beifahrer die Anzeigeeinrichtung bedienen möchten. Dadurch können sowohl der Fahrer als auch der Beifahrer die graphische Benutzeroberfläche auf besonders einfache und deutliche Weise einsehen.

Gemäß einer alternativen vorteilhaften Ausführungsform der Erfindung ist es vorgesehen, dass die Anzeigeeinrichtung auch im ersten Betriebsmodus betrieben wird, falls erfasst wird, dass weder der Fahrer noch der Beifahrer die Anzeigeeinrichtung bedienen möchten. In diesem Fall liegt der Vorteil darin, dass der Fahrer des Kraftwagens die graphische Benutzeroberfläche besonders gut einsehen kann, also eine besonders fahrerorientierte Auslegung der Anzeigeeinrichtung vorliegt. Ob in dem Fall, in welchem weder der Fahrer noch der Beifahrer die Anzeigeeinrichtung gerade bedienen möchte, die Anzeigeeinrichtung im vierten Betriebsmodus oder auch im ersten Betriebsmodus betrieben wird, kann durch ein Konfigurationsmenü angepasst werden. Eine Grundeinstellung kann wahlweise so eingestellt sein, dass entweder in dem besagten Fall der vierte Betriebsmodus oder auch der erste Betriebsmodus eingestellt ist.

In weiterer vorteilhafter Ausgestaltung der Erfindung ist es vorgesehen, dass im dritten Betriebsmodus diejenigen Teile der graphischen Benutzeroberfläche ausschließlich in dem fahrerseitigen Anzeigebereich der Anzeigeeinrichtung angezeigt werden, mittels welchen fahrerrelevante Funktionen des Kraftwagens veränderbar sind. Mit anderen Worten kann es vorgesehen sein, dass die fahrerrelevanten Inhalte im dritten Betriebsmodus nicht in dem beifahrerseitigen Anzeigebereich angezeigt werden. Unter fahrerrelevanten Funktionen des Kraftwagens sind sämtliche Funktionen des Kraftwagens zu verstehen, welche den Fahrbetrieb des Kraftwagens betreffen. Beispielsweise können derartige Funktionen Einstellungen an Fahrerassistenzsystemen des Kraftwagens, wie beispielsweise Einstellungen an einem elektronischen Stabilitätssystem, einer Geschwindigkeitsregelanlage oder dergleichen betreffen. Darüber hinaus können fahrerrelevante Funktionen des Kraftwagens auch beispielsweise Helligkeitseinstellungen an einem Head-up-Display, an einem Kombiinstrument oder dergleichen betreffen. Fahrzeugfunktionen wie beispielsweise eine Radiobedienung, Einstellungen an einer Klimaautomatik, das Abspielen von Videos oder dergleichen werden dabei nicht als fahrerrelevante Funktionen des Kraftwagens angesehen und werden somit - je nachdem, in welcher Menüstruktur man sich gerade befindet - im dritten Betriebsmodus auf dem beifahrerseitigen Anzeigebereich angezeigt. Dadurch, dass diejenigen Teile der graphischen Benutzeroberfläche ausschließlich in dem fahrerseitigen Anzeigebereich der Anzeigeeinrichtung angezeigt werden, mittels welchen fahrerrelevante Funktionen des Kraftwagens veränderbar sind, wird im dritten Betriebsmodus Fällen vorgebeugt, in welchen ein Beifahrer verändernd auf derartige fahrerrelevante Funktionen des Kraftwagens einwirken könnte. Dies trägt unter anderem erheblich zur Steigerung der Fahrsicherheit des Kraftwagens bei, da durch diese Aufteilung im dritten Betriebsmodus sehr wahrscheinlich auch nur der Fahrer gegebenenfalls Veränderungen an fahrerrelevanten Funktionen des Kraftwagens durch eine entsprechende Betätigung der graphischen Benutzeroberfläche vornehmen wird.

In weiterer vorteilhafter Ausgestaltung der Erfindung ist es vorgesehen, dass mittels eines Kamerasystems ermittelt wird, ob der Beifahrer und/oder der Fahrer einen vorbestimmten Abstand zu der Anzeigeeinrichtung mit zumindest einem Finger unterschreiten und in Abhängigkeit davon erfasst wird, ob der Fahrer und/oder der Beifahrer die Anzeigeeinrichtung bedienen möchte. Zusätzlich kann es auch vorgesehen sein, dass die berührungssensitive Anzeigeeinrichtung selbst über eine entsprechende Sensorik - beispielsweise bei einer kapazitiv ausgebildeten berührungssensitiven Anzeigeeinrichtung - verfügt, mittels welcher noch ermittelt werden kann, ob der vorbestimmte Abstand durch einen Finger des Beifahrers und/oder des Fahrers unterschritten wird. Im Zusammenspiel mit dem Kamerasystem kann somit auf besonders zuverlässige Weise ermittelt werden, ob der Beifahrer und/oder der Fahrer gerade vorhaben, die berührungssensitive Anzeigeeinrichtung zu bedienen.

Eine weitere vorteilhafte Ausführungsform der Erfindung sieht vor, dass ermittelt wird, welche Personen jeweils auf einem Fahrersitz und auf einem Beifahrersitz Platz nehmen und für die jeweils unterschiedlichen Personen ein Benutzerprofil angelegt und deren Bedienaktionen an der Anzeigeeinrichtung erfasst und in Abhängigkeit davon die angezeigten Inhalte der graphischen Benutzeroberfläche benutzerprofilspezifisch ausgewählt werden. Mit anderen Worten handelt es sich um ein selbstlernendes System, welches anhand von jeweiligen fortlaufend aktualisierten Benutzerprofilen jeweilige Präferenzen unterschiedlicher Personen bezüglich der jeweils anzuzeigenden graphischen Benutzeroberflächen erkennt und auch nur derartige Elemente der graphischen Benutzeroberfläche anzeigt, welche üblicherweise besonders häufig von den betreffenden Personen bedient werden. Somit wird eine Personalisierung bereitgestellt, wodurch unterschiedlichen Personen jeweils die auf diese bestmöglich abgestimmten Inhalte der graphischen Benutzeroberfläche, z.B. anhand jeweils eingeblendeter Elemente der graphischen Benutzeroberfläche, angezeigt werden.

Eine weitere vorteilhafte Ausführungsform der Erfindung sieht vor, dass die Personenerkennung mittels des Kamerasystems, anhand eines verwendeten Fahrzeugschlüssels und/oder jeweiliger an Türgriffen einen Fahrertür und Beifahrertür angeordneter Fingerabdrucksensoren erfolgt. Dadurch kann auf besonders zuverlässige Weise ermittelt werden, welche Personen gerade auf dem Fahrersitz beziehungsweise auf dem Beifahrersitz Platz genommen haben und entsprechende Bedienaktionen vornehmen, sodass auf besonders zuverlässige Weise die jeweiligen Benutzerprofile mit jeweiligen Bedienaktionen betreffenden Daten befüllt werden können.

Gemäß einer weiteren vorteilhaften Ausführungsform der Erfindung ist es vorgesehen, dass, falls im dritten Betriebsmodus der Fahrer und der Beifahrer widersprüchliche Eingaben an der Anzeigeeinrichtung tätigen, die Eingabe des Fahrers umgesetzt wird. Mit anderen Worten ist es vorgesehen, dass, falls im dritten Betriebsmodus der Fahrer und der Beifahrer widersprüchliche Eingaben an der gerade angezeigten graphischen Benutzeroberfläche vornehmen, die Eingabe des Fahrers die Eingabe des Beifahrers überstimmt. Somit haben die Eingaben des Fahrers immer Vorrang gegenüber den Eingaben des Beifahrers.

Das erfindungsgemäße System zum Betreiben einer berührungssensitiven Anzeigeeinrichtung eines Kraftwagens umfasst eine Erfassungseinrichtung, welche dazu ausgebildet ist zu erfassen, ob ein Fahrer oder ein Beifahrer des Kraftwagens die Anzeigeeinrichtung bedienen möchte, und mit einer Steuereinrichtung, welche dazu ausgebildet ist,
- die Anzeigeeinrichtung in einem ersten Betriebsmodus zu betreiben, in welchem eine graphische Benutzeroberfläche ausschließlich in einem fahrerseitigen Anzeigebereich der Anzeigeeinrichtung angezeigt wird, falls erfasst wird, dass ausschließlich der Fahrer die Anzeigeeinrichtung bedienen möchte;
- die Anzeigeeinrichtung in einem zweiten Betriebsmodus zu betreiben, in welchem die graphische Benutzeroberfläche ausschließlich in einem beifahrerseitigen Anzeigebereich der Anzeigeeinrichtung angezeigt wird, falls erfasst wird, dass ausschließlich der Beifahrer die Anzeigeeinrichtung bedienen möchte;
- die Anzeigeeinrichtung in einem dritten Betriebsmodus zu betreiben, in welchem die graphische Benutzeroberfläche in dem fahrerseitigen Anzeigebereich und zumindest ein Teil der graphischen Benutzeroberfläche zusätzlich noch in dem beifahrerseitigen Anzeigebereich angezeigt wird, falls erfasst wird, dass der Fahrer und der Beifahrer des Kraftwagens die Anzeigeeinrichtung bedienen möchten.

Vorteilhafte Ausgestaltungen des erfindungsgemäßen Verfahrens sind als vorteilhafte Ausgestaltungen des erfindungsgemäßen Systems anzusehen, wobei das System insbesondere Mittel zur Durchführung der Verfahrensschritte aufweist.

Der erfindungsgemäße Kraftwagen umfasst das erfindungsgemäße System zum Betreiben einer berührungssensitiven Anzeigeeinrichtung.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftwagens mit einem System zum Betreiben einer berührungssensitiven Anzeigeeinrichtung;
- Fig. 2: eine Perspektivansicht auf ein teilweise dargestelltes Cockpit des Kraftwagens, wobei die berührungssensitive Anzeigeeinrichtung in Form eines Zentraldisplays oberhalb von einer Mittelkonsole des Cockpits angeordnet ist;
- Fig. 3: eine schematische Darstellung der berührungssensitiven Anzeigeeinrichtung, wobei diese eine graphische Benutzeroberfläche in einem mittigen Anzeigebereich der Anzeigeeinrichtung anzeigt;
- Fig. 4: eine schematische Darstellung der berührungssensitiven Anzeigeeinrichtung, wobei diese die graphische Benutzeroberfläche in einem fahrerseitigen Anzeigebereich der Anzeigeeinrichtung anzeigt;
- Fig. 5: eine schematische Darstellung der Anzeigeeinrichtung, wobei diese die graphische Benutzeroberfläche in einem beifahrerseitigen Anzeigebereich der Anzeigeeinrichtung anzeigt; und in
- Fig. 6: die berührungssensitive Anzeigeeinrichtung, wobei diese die graphische Benutzeroberfläche in dem fahrerseitigen Anzeigebereich und einen Teil der graphischen Benutzeroberfläche zusätzlich noch in dem beifahrerseitigen Anzeigebereich anzeigt.

In den Figuren werden gleiche oder funktionsgleiche Elemente mit gleichen Bezugszeichen versehen.

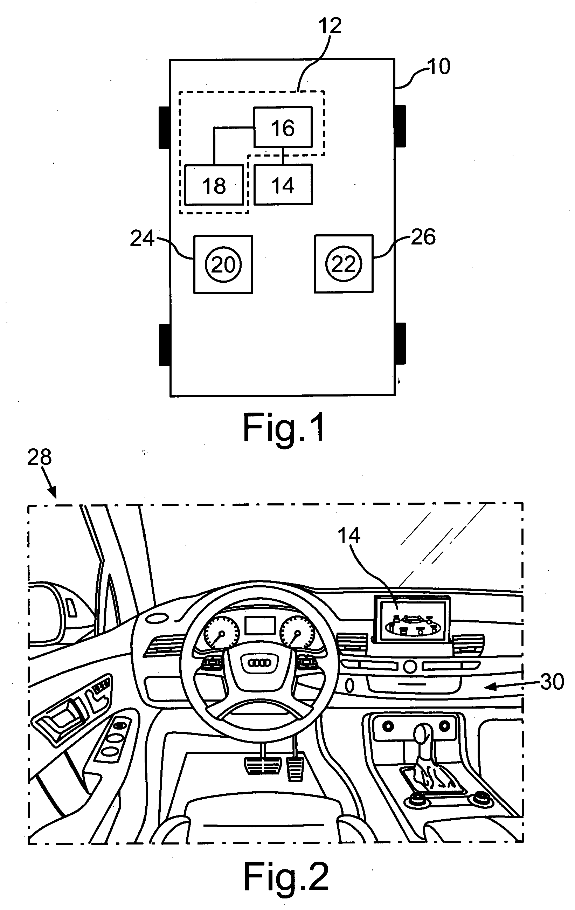

Ein Kraftwagen 10 mit einem System 12 zum Betreiben einer berührungssensitiven Anzeigeeinrichtung 14 des Kraftwagens 10 ist in einer schematischen Darstellung in Fig. 1 gezeigt. Das System 12 umfasst eine Steuereinrichtung 16, welche dazu ausgebildet ist, die Anzeigeeinrichtung 14 in verschiedenen Betriebsmodi zu betreiben. Das System 12 umfasst des Weiteren ein Kamerasystem 18, welches dazu ausgebildet ist, zu erfassen, ob ein Fahrer 20 oder ein Beifahrer 22 gerade die berührungssensitive Anzeigeeinrichtung 14 bedienen möchten. Das Kamerasystem 18 ist zudem dazu ausgebildet, zu ermitteln, welche Person jeweils auf einem Fahrersitz 24 und auf einem Beifahrersitz 26 Platz nimmt und diese Information an die Steuereinrichtung 16 zu übertragen. Die Steuereinrichtung 16 ist wiederum dazu ausgebildet, für die jeweils unterschiedlichen Personen ein Benutzerprofil anzulegen und deren Bedienaktionen an der berührungssensitiven Anzeigeeinrichtung 14 zu erfassen und zu speichern und in Abhängigkeit davon die angezeigten Inhalte einer graphischen Benutzeroberfläche, welche mittels der Anzeigeeinrichtung 14 angezeigt werden, benutzerprofilspezifisch auszuwählen.

Das System 12 kann darüber hinaus noch jeweilige, hier nicht dargestellte, an Türgriffen einer Fahrertür und Beifahrertür angeordnete Fingerabdrucksensoren aufweisen, mittels welchen ebenfalls die Personenerkennung erfolgen kann. Darüber hinaus kann das System 12 auch dazu ausgelegt sein, anhand eines jeweils verwendeten Fahrzeugschlüssels, mittels welchem der Kraftwagen 10 aufgesperrt worden ist, die Personenerkennung - zumindest bezüglich eines Fahrers - durchzuführen.

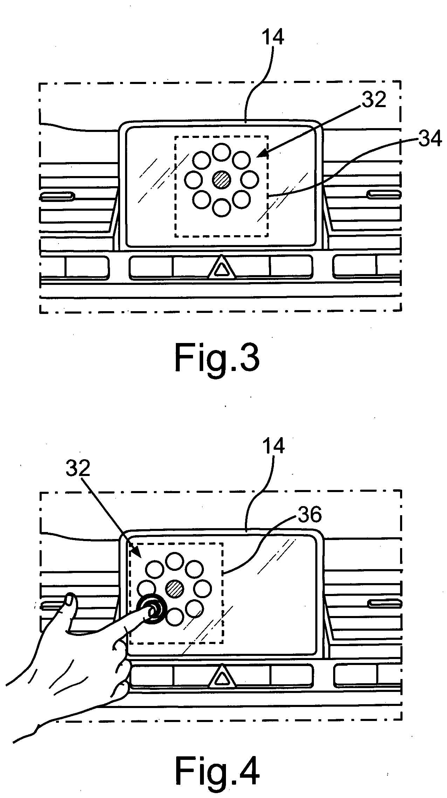

In Fig. 2 ist ein Cockpit 28 des Kraftwagens 10 teilweise dargestellt. Die berührungssensitive Anzeigeeinrichtung 14 ist oberhalb von einer Mittelkonsole 30 des Cockpits angeordnet und fungiert somit als ein Zentraldisplay. Über die berührungssensitive Anzeigeeinrichtung 14 können berührungsgesteuert unterschiedlichste Funktionen des Kraftwagens 10 angesteuert und verändert werden, wie beispielsweise verschiedenste Infotainmentfunktionen, aber auch Einstellungen an Fahrerassistenzsystemen und dergleichen. Nachfolgend wird ein Verfahren zum Betreiben der berührungssensitiven Anzeigeeinrichtung 14 anhand der Fig. 3 bis 6 näher erläutert.

In Fig. 3 ist die berührungssensitive Anzeigeeinrichtung 14 gezeigt, wobei diese in einem derartigen Betriebsmodus betrieben wird, dass eine graphische Benutzeroberfläche 32 ausschließlich in einem mittigen Anzeigebereich 34 der Anzeigeeinrichtung 14 angezeigt wird. Dies geschieht immer in den Fällen, in denen erfasst wird, dass weder der Fahrer 20 noch der Beifahrer 22 die Anzeigeeinrichtung 14 gerade bedienen möchten. Um zu erfassen, ob der Beifahrer 20 oder der Beifahrer 22 gerade die Anzeigeeinrichtung 14 bedienen möchten, wird mittels des Kamerasystems 18 ermittelt, ob der Beifahrer 20 und/oder der Beifahrer 22 gerade einen vorbestimmten Abstand, beispielsweise von 5 Zentimetern, 10 Zentimetern oder 20 Zentimetern, zu der Anzeigeeinrichtung 14 mit zumindest einem Finger unterschreiten, wobei in Abhängigkeit davon erfasst wird, ob der Fahrer 20 und/oder der Beifahrer 22 die Anzeigeeinrichtung 14 gleich bedienen möchten. Für den Fall, dass die berührungssensitive Anzeigeeinrichtung 14 eine kapazitive Anzeigeeinrichtung ist, kann eine entsprechend daran vorgesehene Sensorik zusätzlich noch ermitteln, ob eine entsprechende Unterschreitung des vorbestimmten Abstands zu der Anzeigeeinrichtung 14 erfolgt ist.

In Fig. 4 ist der Fall gezeigt, dass erfasst worden ist, dass ausschließlich der Fahrer 20 die Anzeigeeinrichtung 14 bedienen möchte. In diesem Fall wird die Anzeigeeinrichtung 14 mittels der Steuereinrichtung 16 in einem ersten Betriebsmodus betrieben, in welchem die graphische Benutzeroberfläche 32 ausschließlich in einem fahrerseitigen Anzeigebereich 36 der Anzeigeeinrichtung 14 angezeigt wird. Mit anderen Worten wird also die graphische Benutzeroberfläche 32 in Richtung des Fahrers 20 verschoben und angezeigt, sodass der Fahrer 20 auf besonders einfache Weise die entsprechenden Bedienelemente der graphischen Benutzeroberfläche 32 betätigen kann, insbesondere ohne seine übliche Fahrposition zu verlassen.

Im Gegensatz zu dem im Zusammenhang mit Fig. 3 beschriebenen Betriebsmodus kann es auch vorgesehen sein, dass die Anzeigeeinrichtung 14 ebenfalls in diesem ersten, also dem in Fig. 4 gezeigten Betriebsmodus, betrieben wird, falls erfasst wird, dass weder der Fahrer 20 noch der Beifahrer 22 die Anzeigeeinrichtung 14 bedienen möchten. Mit anderen Worten kann es also vorgesehen sein, dass in dem Fall, dass weder der Fahrer 20 noch der Beifahrer 22 sich gerade der Anzeigeeinrichtung 14 angenähert haben, immer eine fahrerorientierte Anzeige der graphischen Benutzeroberfläche 32 erfolgt, indem diese in dem fahrerseitigen Anzeigebereich 36 angezeigt wird.

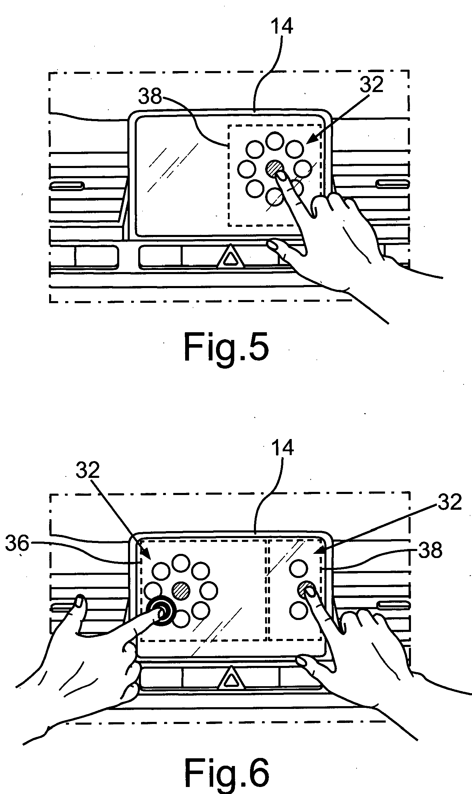

In Fig. 5 ist erneut die Anzeigeeinrichtung 14 gezeigt. Im vorliegenden Fall ist erfasst worden, dass ausschließlich der Beifahrer 22 gerade die Anzeigeeinrichtung 14 bedienen möchte. In diesem Fall betreibt die Steuereinrichtung 16 die Anzeigeeinrichtung 14 in einem zweiten Betriebsmodus, in welchem die graphische Benutzeroberfläche 32 ausschließlich in einem beifahrerseitigen Anzeigebereich 38 der Anzeigeeinrichtung 14 angezeigt wird. Mit anderen Worten wird für den Fall, dass nur der Beifahrer 22 die Anzeigeeinrichtung 14 bedienen möchte, die gerade aufgerufene graphische Benutzeroberfläche 32 in Richtung des Beifahrers 22 verschoben, sodass er die Bedienelemente der graphischen Benutzeroberfläche 32 auf besonders einfache Weise erreichen kann, insbesondere ohne seine Position in dem Beifahrersitz 26 merklich verändern zu müssen.

In Fig. 6 ist die Anzeigeeinrichtung 14 erneut dargestellt. Im vorliegenden Fall ist mittels des Kamerasystems 18 erfasst worden, dass sowohl der Fahrer 20 als auch der Beifahrer 22 die Anzeigeeinrichtung 14 bedienen möchten. Die Steuereinrichtung 16 betreibt die Anzeigeeinrichtung 14 in einem dritten Betriebsmodus, in welchem die graphische Benutzeroberfläche 32 in dem fahrerseitigen Anzeigebereich 36 und zumindest einen Teil der graphischen Benutzeroberfläche 32 zusätzlich noch in dem beifahrerseitigen Anzeigebereich 38 angezeigt wird.

Vorzugsweise werden in dem dritten Betriebsmodus diejenigen Teile der graphischen Benutzeroberfläche ausschließlich in dem fahrerseitigen Anzeigebereich 36 angezeigt, mittels welchen fahrerrelevante Funktionen des Kraftwagens veränderbar sind. Mit anderen Worten werden diejenigen Teile beziehungsweise Elemente der graphischen Benutzeroberfläche 32 nicht in dem beifahrerseitigen Anzeigebereich 38 angezeigt, mittels welchen fahrerrelevante Funktionen des Kraftwagens 10 veränderbar sind. Beispielsweise werden derartige Menüelemente der graphischen Benutzeroberfläche 32 nicht in dem beifahrerseitigen Anzeigebereich 38 angezeigt, mittels welchen eine Helligkeit eines Head-up-Displays, eines Kombiinstruments oder dergleichen eingestellt werden können. Darüber hinaus werden auch derartige Bedienelemente der graphischen Benutzeroberfläche 32 nicht in dem beifahrerseitigen Anzeigebereich 38 angezeigt, mittels welchen unterschiedlichste Fahrerassistenzsysteme, wie beispielsweise ein Tempomat, unterschiedlichste Einstellmöglichkeiten an einem elektronischen Fahrstabilitätssystem und dergleichen, eingestellt werden können. Für den Fall, dass erfasst worden ist, dass sowohl der Fahrer 20 als auch der Beifahrer 22 also die Anzeigeeinrichtung 14 bedienen möchten, werden nur diejenigen Elemente der graphischen Benutzeroberfläche 32 in dem beifahrerseitigen Anzeigebereich 38 angezeigt, mittels welchen keine fahrerrelevanten Funktionen des Kraftwagens 10 veränderbar sind.

Falls zudem im dritten Betriebsmodus der Fahrer 20 und der Beifahrer 22 widersprüchliche Eingaben an der Anzeigeeinrichtung 14, genauer also an der graphischen Benutzeroberfläche 32, tätigen sollten, wird die Eingabe des Fahrers 20 umgesetzt. Mit anderen Worten überstimmt die Eingabe des Fahrers 20 immer die Eingabe des Beifahrers 22, zumindest solange die Anzeigeeinrichtung 14 - wie in Fig. 6 gezeigt - im dritten Betriebsmodus, also in einer Art Splitscreen-Modus, betrieben wird.

In Fig. 5 und Fig. 6 sind der fahrerseitige Anzeigebereich 36 und der beifahrerseitige Anzeigebereich 38 unterschiedlich groß dargestellt. Dies muss nicht zwangsläufig der Fall sein. Es kann auch vorgesehen sein, dass im dritten Betriebsmodus der fahrerseitige Anzeigebereich 36 und der beifahrerseitige Anzeigebereich 38 gleich groß gewählt werden. Vorzugsweise werden der fahrerseitige Anzeigebereich 36 und der beifahrerseitige Anzeigebereich 38 in Abhängigkeit davon so groß dimensioniert, wie viele Elemente der graphischen Benutzeroberfläche 32 in den jeweiligen Anzeigebereichen 36, 38 gerade angezeigt werden sollen.

## Patentansprüche

1. Verfahren zum Betreiben einer berührungssensitiven Anzeigeeinrichtung (14) eines Kraftwagens (10), mit den Schritten:
- Erfassen, ob ein Fahrer (20) oder ein Beifahrer (22) des Kraftwagens (10) die Anzeigeeinrichtung (14) bedienen möchte;
- falls erfasst wird, dass ausschließlich der Fahrer (20) die Anzeigeeinrichtung (14) bedienen möchte: Betreiben der Anzeigeeinrichtung (14) in einem ersten Betriebsmodus, in welchem eine graphische Benutzeroberfläche (32) ausschließlich in einem fahrerseitigen Anzeigebereich (36) der Anzeigeeinrichtung (14) angezeigt wird;
- falls erfasst wird, dass ausschließlich der Beifahrer (22) des Kraftwagens (10) die Anzeigeeinrichtung (14) bedienen möchte: Betreiben der Anzeigeeinrichtung (14) in einem zweiten Betriebsmodus, in welchem die graphische Benutzeroberfläche (32) ausschließlich in einem beifahrerseitigen Anzeigebereich (38) der Anzeigeeinrichtung (14) angezeigt wird;
- falls erfasst wird, dass der Fahrer (20) und der Beifahrer (22) des Kraftwagens (10) die Anzeigeeinrichtung (14) bedienen möchten: Betreiben der Anzeigeeinrichtung (14) in einem dritten Betriebsmodus, in welchem die graphische Benutzeroberfläche (32) in dem fahrerseitigen Anzeigebereich (36) und zumindest ein Teil der graphischen Benutzeroberfläche (32) zusätzlich noch in dem beifahrerseitigen Anzeigebereich (38) angezeigt wird.

2. Verfahren nach Anspruch 1,
**dadurch gekennzeichnet, dass**
die Anzeigeeinrichtung (14) in einem vierten Betriebsmodus betrieben wird, in welchem die graphische Benutzeroberfläche (32) ausschließlich in einem mittigen Anzeigebereich (34) der Anzeigeeinrichtung (14) angezeigt wird, falls erfasst wird, dass weder der Fahrer (20) noch der Beifahrer (22) die Anzeigeeinrichtung (14) bedienen möchten.

3. Verfahren nach Anspruch 1,
**dadurch gekennzeichnet, dass**
die Anzeigeeinrichtung (14) auch im ersten Betriebsmodus betrieben wird, falls erfasst wird, dass weder der Fahrer (20) noch der Beifahrer (22) die Anzeigeeinrichtung (14) bedienen möchten.

4. Verfahren nach einem der vorhergehenden Ansprüche,
**dadurch gekennzeichnet, dass**
im dritten Betriebsmodus diejenigen Teile der graphischen Benutzeroberfläche (32) ausschließlich in dem fahrerseitigen Anzeigebereich (36) der Anzeigeeinrichtung (14) angezeigt werden, mittels welchen fahrerrelevante Funktionen des Kraftwagens (10) veränderbar sind.

5. Verfahren nach einem der vorhergehenden Ansprüche,
**dadurch gekennzeichnet, dass**
mittels eines Kamerasystems (18) ermittelt wird, ob der Beifahrer (22) und/oder der Fahrer (20) einen vorbestimmten Abstand zu der Anzeigeeinrichtung (14) mit zumindest einem Finger unterschreiten und in Abhängigkeit davon erfasst wird, ob der Fahrer (20) und/oder der Beifahrer (22) die Anzeigeeinrichtung (14) bedienen möchte.

6. Verfahren nach einem der vorhergehenden Ansprüche,
**dadurch gekennzeichnet, dass**
ermittelt wird, welche Personen jeweils auf einem Fahrersitz (24) und auf einem Beifahrersitz (26) Platz nehmen und für die jeweils unterschiedlichen Personen ein Benutzerprofil angelegt und deren Bedienaktionen an der Anzeigeeinrichtung (14) erfasst und in Abhängigkeit davon die anzeigten Inhalte der graphischen Benutzeroberfläche (32) benutzerprofilspezifisch ausgewählt werden.

7. Verfahren nach Anspruch 6,
**dadurch gekennzeichnet, dass**
die Personenerkennung mittels des Kamerasystems (18), anhand eines verwendeten Fahrzeugschlüssels und/oder jeweiliger an Türgriffen einer Fahrertür und Beifahrertür angeordneter Fingerabdrucksensoren erfolgt.

8. Verfahren nach einem der vorhergehenden Ansprüche,
**dadurch gekennzeichnet, dass**
falls im dritten Betriebsmodus der Fahrer (20) und der Beifahrer (22) widersprüchliche Eingaben an der Anzeigeeinrichtung (14) tätigen, die Eingabe des Fahrers (20) umgesetzt wird.

9. System (12) zum Betreiben einer berührungssensitiven Anzeigeeinrichtung (14) eines Kraftwagens (10), mit einer Erfassungseinrichtung (18), welche dazu ausgebildet ist, zu erfassen, ob ein Fahrer (20) oder ein Beifahrer (22) des Kraftwagens (10) die Anzeigeeinrichtung (14) bedienen möchte, und mit einer Steuereinrichtung (16), welche dazu ausgebildet ist,
- die Anzeigeeinrichtung (14) in einem ersten Betriebsmodus zu betreiben, in welchem eine graphische Benutzeroberfläche (32) ausschließlich in einem fahrerseitigen Anzeigebereich (36) der Anzeigeeinrichtung (14) angezeigt wird, falls erfasst wird, dass ausschließlich der Fahrer (20) die Anzeigeeinrichtung (14) bedienen möchte;
- die Anzeigeeinrichtung (14) in einem zweiten Betriebsmodus zu betreiben, in welchem die graphische Benutzeroberfläche (32) ausschließlich in einem beifahrerseitigen Anzeigebereich (38) der Anzeigeeinrichtung (14) angezeigt wird, falls erfasst wird, dass ausschließlich der Beifahrer (22) die Anzeigeeinrichtung (14) bedienen möchte;
- die Anzeigeeinrichtung (14) in einem dritten Betriebsmodus zu betreiben, in welchem die graphische Benutzeroberfläche (32) in dem fahrerseitigen Anzeigebereich (36) und zumindest ein Teil der graphischen Benutzeroberfläche (32) zusätzlich noch in dem beifahrerseitigen Anzeigebereich (38) angezeigt wird, falls erfasst wird, dass der Fahrer (20) und der Beifahrer (22) des Kraftwagens (10) die Anzeigeeinrichtung (14) bedienen möchten.

10. Kraftwagen (10) mit einem System (12) nach Anspruch 9.

## Claims

1. Method for operating a touch-sensitive display device (14) of a motor vehicle (10), having the steps:
- detecting whether a driver (20) or a front-seat passenger (22) of the motor vehicle (10) would like to operate the display device (14);
- if it is detected that exclusively the driver (20) would like to operate the display device (14): operating the display device (14) in a first operating mode, in which a graphic user interface (32) is displayed exclusively in a driver-side display zone (36) of the display device (14);
- if it is detected that exclusively the front-seat passenger (22) of the motor vehicle (10) would like to operate the display device (14): operating the display device (14) in a second operating mode, in which the graphic user interface (32) is displayed exclusively in a front-seat-passenger-side display zone (38) of the display device (14);
- if it is detected that the driver (20) and the front-seat passenger (22) of the motor vehicle (10) would like to operate the display device (14): operating the display device (14) in a third operating mode, in which the graphic user interface (32) is displayed in the driver-side display zone (36) and at least part of the graphic user interface (32) is additionally also displayed in the front-seat-passenger-side display zone (38).

2. Method according to claim 1,
**characterised in that**
the display device (14) is operated in a fourth operating mode, in which the graphic user interface (32) is displayed exclusively in a central display zone (34) of the display device (14), if it is detected that neither the driver (20) nor the front-seat passenger (22) would like to operate the display device (14).

3. Method according to claim 1,
**characterised in that**
the display device (14) is also operated in the first operating mode, if it is detected that neither the driver (20) nor the front-seat passenger (22) would like to operate the display device (14).

4. Method according to any one of the preceding claims,
**characterised in that**
in the third operating mode those parts of the graphic user interface (32) by means of which driver-relevant functions of the motor vehicle (10) can be changed are displayed exclusively in the driver-side display zone (36) of the display device (14).

5. Method according to any one of the preceding claims,
**characterised in that**
it is established by means of a camera system (18), whether the front-seat passenger (22) and/or the driver (20) come within a predetermined distance of the display device (14) with at least one finger and, depending thereon, it is detected, whether the driver (20) and/or the front-seat passenger (22) would like to operate the display device (14).

6. Method according to any one of the preceding claims,
**characterised in that**
it is established, which persons sit respectively on a driver's seat (24) and on a front-seat-passenger's seat (26), and a user profile is created for the respective different persons and their operating actions on the display device (14) are detected and, depending thereon, the displayed contents of the graphic user interface (32) are selected specific to the user profile.

7. Method according to claim 6,
**characterised in that**
the identification of persons is performed by means of the camera system (18), using a vehicle key that is employed and/or fingerprint sensors arranged respectively on door handles of a driver's door and front-seat-passenger's door.

8. Method according to any one of the preceding claims,
**characterised in that**,
if in the third operating mode the driver (20) and the front-seat passenger (22) enter contradictory inputs on the display device (14), the input of the driver (20) will be implemented.

9. System (12) for operating a touch-sensitive display device (14) of a motor vehicle (10), having a detection device (18), which is configured to detect, whether a driver (20) or a front-seat passenger (22) of the motor vehicle (10) would like to operate the display device (14), and having a control device (16), which is configured
- to operate the display device (14) in a first operating mode, in which a graphic user interface (32) is displayed exclusively in a driver-side display zone (36) of the display device (14), if it is detected that exclusively the driver (20) would like to operate the display device (14);
- to operate the display device (14) in a second operating mode, in which the graphic user interface (32) is displayed exclusively in a front-seat-passenger-side display zone (38) of the display device (14), if it is detected that exclusively the front-seat passenger (22) would like to operate the display device (14);
- to operate the display device (14) in a third operating mode, in which the graphic user interface (32) is displayed in the driver-side display zone (36) and at least part of the graphic user interface (32) is additionally also displayed in the front-seat-passenger-side display zone (38), if it is detected that the driver (20) and the front-seat passenger (22) of the motor vehicle (10) would like to operate the display device (14).

10. Motor vehicle (10) having a system (12) according to claim 9.

## Revendications

1. Procédé pour faire fonctionner un dispositif d'affichage tactile (14) d'un véhicule à moteur (10), avec les étapes de :
- détection du fait si un conducteur (20) ou un passager (22) du véhicule à moteur (10) souhaite commander le dispositif d'affichage (14) ;
- s'il est détecté que exclusivement le conducteur (20) souhaite commander le dispositif d'affichage (14) : fonctionnement du dispositif d'affichage (14) dans un premier mode de fonctionnement, dans lequel une interface utilisateur graphique (32) est affichée exclusivement dans une zone d'affichage côté conducteur (36) du dispositif d'affichage (14) ;
- s'il est détecté que exclusivement le passager (22) du véhicule à moteur (10) souhaite commander le dispositif d'affichage (14) : fonctionnement du dispositif d'affichage (14) dans un deuxième mode de fonctionnement, dans lequel l'interface utilisateur graphique (32) est affichée exclusivement dans une zone d'affichage côté passager (38) du dispositif d'affichage (14) ;
- s'il est détecté que le conducteur (20) et le passager (22) du véhicule à moteur (10) souhaitent commander le dispositif d'affichage (14) : fonctionnement du dispositif d'affichage (14) dans un troisième mode de fonctionnement, dans lequel l'interface utilisateur graphique (32) est affichée dans la zone d'affichage côté conducteur (36) et au moins une partie de l'interface utilisateur graphique (32) est affichée en plus dans la zone d'affichage côté passager (38).

2. Procédé selon la revendication 1,
**caractérisé en ce que**
le dispositif d'affichage (14) fonctionne dans un quatrième mode de fonctionnement, dans lequel l'interface utilisateur graphique (32) est affichée exclusivement dans une zone d'affichage centrale (34) du dispositif d'affichage (14), s'il est détecté que ni le conducteur (20) ni le passager (22) ne souhaitent commander le dispositif d'affichage (14).

3. Procédé selon la revendication 1,
**caractérisé en ce que**
le dispositif d'affichage (14) fonctionne aussi dans le premier mode de fonctionnement, s'il est détecté que ni le conducteur (20) ni le passager (22) ne souhaitent commander le dispositif d'affichage (14).

4. Procédé selon l'une quelconque des revendications précédentes,
**caractérisé en ce que**
dans le troisième mode de fonctionnement, les parties de l'interface utilisateur graphique (32) sont affichées exclusivement dans la zone d'affichage côté passager (36) du dispositif d'affichage (14), au moyen desquelles des fonctions importantes pour le conducteur du véhicule à moteur (10) peuvent être modifiées.

5. Procédé selon l'une quelconque des revendications précédentes,
**caractérisé en ce que**
il est déterminé au moyen d'un système de caméra (18), si le passager (22) et/ou le conducteur (20) passe sous une distance prédéterminée par rapport au dispositif d'affichage (14) avec au moins un doigt et il est détecté en fonction de cela, si le conducteur (20) et/ou le passager (22) souhaite commander le dispositif d'affichage (14).

6. Procédé selon l'une quelconque des revendications précédentes,
**caractérisé en ce que**
il est déterminé quelles personnes prennent respectivement place sur un siège conducteur (24) et sur un siège passager (26) et un profil utilisateur est créé pour les respectivement différentes personnes et leurs actions de commande au niveau du dispositif d'affichage (14) sont détectées et en fonction de cela les contenus affichés de l'interface utilisateur graphique (32) sont sélectionnés de manière spécifique au profil utilisateur.

7. Procédé selon la revendication 6,
**caractérisé en ce que**
la détection de personne se fait au moyen du système de caméra (18), à l'aide d'une clé de véhicule utilisée et/ou de capteurs d'empreinte digitale respectifs agencés au niveau de poignées de porte d'une porte conducteur et porte passager.

8. Procédé selon l'une quelconque des revendications précédentes,
**caractérisé en ce que**
si dans le troisième mode de fonctionnement, le conducteur (20) et le passager (22) font des saisies contradictoires au niveau du dispositif d'affichage (14), la saisie du conducteur (20) est mise en œuvre.

9. Système (12) pour faire fonctionner un dispositif d'affichage tactile (14) d'un véhicule à moteur (10), avec un dispositif de détection (18), lequel est réalisé pour détecter si un conducteur (20) ou un passager (22) du véhicule à moteur (10) souhaite commander le dispositif d'affichage (14), et avec un dispositif de commande (16), lequel est réalisé pour
- faire fonctionner le dispositif d'affichage (14) dans un premier mode de fonctionnement, dans lequel une interface utilisateur graphique (32) est affichée exclusivement dans une zone d'affichage côté conducteur (36) du dispositif d'affichage (14), s'il est détecté que exclusivement le conducteur (20) souhaite commander le dispositif d'affichage (14) ;
- faire fonctionner le dispositif d'affichage (14) dans un deuxième mode de fonctionnement, dans lequel l'interface utilisateur graphique (32) est affichée exclusivement dans une zone d'affichage côté passager (38) du dispositif d'affichage (14), s'il est détecté que exclusivement le passager (22) souhaite commander le dispositif d'affichage (14) ;
- faire fonctionner le dispositif d'affichage (14) dans un troisième mode de fonctionnement, dans lequel l'interface utilisateur graphique (32) est affichée dans la zone d'affichage côté conducteur (36) et au moins une partie de l'interface utilisateur graphique (32) est affichée en plus dans la zone d'affichage côté passager (38), s'il est détecté que le conducteur (20) et le passager (22) du véhicule à moteur (10) souhaitent commander le dispositif d'affichage (14).

10. Véhicule à moteur (10) avec un système (12) selon la revendication 9.
